# EUROPEAN PATENT SPECIFICATION

(11) **EP 1 537 250 B1**
(45) Date of publication and mention of the grant of the patent: **23.01.2008**
(21) Application number: 03795195.1
(22) Date of filing: 28.08.2003
(51) Int. Cl.: C22C 1/04

(54) **NON-EVAPORABLE GETTER COMPOSITIONS WHICH CAN BE REACTIVATED AT LOW TEMPERATURE AFTER EXPOSURE TO REACTIVE GASES AT A HIGHER TEMPERATURE**
GETTERZUSAMMENSETZUNG DIE REAKTIVIERBAR IST BY NIEDRIGER TEMPERATUR NACH AUSSETZUNG REAKTIVER GASE BEI HOHERER TEMPERATUR
COMPOSITIONS DE GETTER NON EVAPORABLE POUVANT ETRE REACTIVEES A BASSE TEMPERATURE APRES EXPOSITION A DES GAZ REACTIFS A TEMPERATURE PLUS ELEVEE

(30) Priority: 13.09.2002 IT MI20021950; 25.10.2002 IT MI20022280; 08.07.2003 IT MI20031392
(43) Date of publication of application: 08.06.2005
(73) Proprietor: SAES GETTERS S.p.A., 20020 Lainate (Milano) (IT)
(72) Inventor: GALLITOGNOTTA, Alessandro, I-21040 Origgio (IT); TOIA, Luca, I-21040 Carnago (IT); BOFFITO, Claudio, I-20014 Nerviano, MI (IT)
(74) Representative: Adorno, Silvano
(86) International application number: PCT/IT2003/000522
(87) International publication number: WO 2004/024965

(56) References cited:
- EP-A- 0 719 609
- WO-A-01/92590
- GB-A- 2 077 487

## Description

The present invention is directed to compositions containing non-evaporable getter alloys which, after having lost their functionality as a consequence of an exposure to reactive gases at a first temperature, can then be reactivated by means of a thermal treatment at a second temperature, lower than the first one.

Non-evaporable getter alloys, also known as NEG alloys, can reversibly sorb hydrogen and irreversibly gases such as oxygen, water, carbon oxides and, in the case of some alloys, nitrogen.

These alloys are employed in a number of industrial applications which require the maintenance of vacuum: examples of these applications are the accelerators of particles, the X-rays generating tubes, the displays formed of cathode ray tubes or CRTs, the flat displays of the field-emission type (called FEDs) and the evacuated jackets for the thermal insulation, such as the thermal bottles (thermos), Dewar bottles or the pipes for the oil extraction and transportation.

NEG alloys can be also employed to remove the above-mentioned gases when traces thereof are present in other gases, generally noble gases. An example is the use in lamps, particularly fluorescent lamps which are filled with noble gases at pressure of some tens of hectoPascal (hPa), wherein the NEG alloy has the function of removing traces of oxygen, water, hydrogen and other gases so to keep a suitable atmosphere for the lamp operation; another example is the use in plasma displays, wherein the function of the NEG alloy is substantially similar to the one carried out in fluorescent lamps.

These alloys have generally as main components zirconium and/or titanium and comprise one or more additional elements selected among the transition metals, Rare Earths or aluminum.

NEG alloys are the subject-matter of a number of patents. US patent no. 3,203,901 discloses Zr-Al alloys, and in particular the alloy having weight percent composition Zr 84%-A1 16%, manufactured and sold by the applicant under the trade-name St 101; US patent no. 4,071,335 discloses Zr-Ni alloys, and in particular the alloy having weight percent composition Zr 75.7%-Ni 24.3%, manufactured and sold by the applicant under the trade-name St 199; US patent no. 4,306,887 discloses Zr-Fe alloys and in particular the alloy having weight percent composition Zr 76.6%-Fe 23.4%, manufactured and sold by the applicant under the trade-name St 198; US patent no. 4,312,669 discloses Zr-V-Fe alloys, and in particular the alloy having weight percent composition Zr 70% - V 24.6% - Fe 5.4%, manufactured and sold by the applicant under the trade-name St 707; US patent no. 4,668,424 discloses zirconium-nickel-mischmetal alloys with optional addition of one or more other transition metals; US patent no. 4,839,085 discloses Zr-V-E alloys, wherein E is an element selected among iron, nickel, manganese and aluminum or a mixture thereof; US patent no. 5,180,568 discloses intermetallic compounds Zr₁M'₁M"₁, wherein M' and M", being identical or different from one another, are selected among Cr, Mn, Fe, Co and Ni, and in particular the compound Zr₁Mn₁Fe₁, manufactured and sold by the applicant under the trade-name St 909; US patent no. 5,961,750 discloses Zr-Co-A alloys wherein A is an element selected among yttrium, lanthanum, Rare Earths or a mixture thereof, and in particular the alloy having the weight percent composition Zr 80.8% - Co 14.2% - A 5%, manufactured and sold by the applicant under the trade-name St 787; US patent no. 6,521,014 B2 discloses zirconium-vanadium-iron-manganese-mischmetal alloys, and in particular the alloy having weight percent composition Zr 70% - V 15% - Fe 3.3% - Mn 8.7% - MM 3%, manufactured and sold by the applicant under the trade-name St 2002; with MM there is meant mischmetal, i.e. a commercial mixture of Rare Earths, for example having weight percent composition 50% cerium, 30% lanthanum, 15% neodymium, balance 5% of other Rare Earths.

These alloys are used alone or in a mixture with a second component, generally a metal, capable of granting to a body formed with the alloy particular characteristics, such as a higher mechanical strength. The most commonly used metals to this purpose are zirconium, titanium, nickel and aluminum; compositions comprising the cited St 707 alloy and zirconium or titanium are described for example in the patent GB 2,077,487, while in US patent no. 5,976,723 are described compositions containing aluminum and a NEG alloy of formula Zr₁₋ₓTiₓM'M", wherein M' and M" are metals selected among Cr, Mn, Fe, Co and Ni, and x is comprised between 0 and 1.

The functioning principle of NEG alloys is the reaction among the metallic atoms on the alloy surface and the absorbed gases, in consequence of which a layer of oxides, nitrides or carbides of the metals is formed on that surface. When surface coverage is complete, the alloy is inactive for further absorptions: its function can be restored through a reactivation treatment, at a temperature which is at least the same and preferably higher than the working temperature.

However, in some cases, it is impossible to treat an alloy for its activation or reactivation at a temperature higher than that at which it has been previously exposed to gases. It is in particular the case of alloys which are used in devices wherein the space to the kept under vacuum or controlled atmosphere is defined by walls made of glass, such as CRT-type screens, flat displays being either field emission displays or plasma display panels, and lamps. The manufacturing of these devices generally provides for the getter alloy being inserted in its final position when the device is still open and its inner space is exposed to the atmosphere; thereafter, the device is sealed through a so-called "frit-sealing" step, wherein between two glass portions to be welded together a low-melting glass paste is placed which, brought to about 450 °C, melts, thus joining the two portions. The vacuum or the controlled atmosphere can be obtained in the inner space of the device before sealing (in the so-called "in chamber" processes, wherein the device assembling steps are carried out in an enclosure under vacuum or controlled atmosphere) or, more commonly, after the frit-sealing, by means of a "tail", i.e. a small glass tubule admitting to said space and suitable for connection to a pumping system; in case of devices containing a controlled atmosphere, such as the plasma displays and some lamps, the tail is used also for the filling with the desired gases; finally the device is sealed by closing the tail, usually by heat compression. In any case, during frit-sealing, the NEG alloy is exposed to an atmosphere of reactive gases, being the gases released by the low-melting glass paste in case of "in chamber" processes, and these same gases plus the atmospheric gases in case of "tail" processes. The contact between the alloy and the reactive gases occurs at a temperature depending on the process: the device can be homogeneously brought to the frit-sealing temperature within a furnace, in which case the NEG alloy will be exposed to the reactive gases at a temperature of about 450 °C; in alternative it is possible to use a localized heating, e.g. by irradiation, in which case the getter temperature during the operation depends on its distance from the frit-sealing zone. In any case, during these operations the NEG alloy surface reacts with more or less intensity with the gases being present, with consequent at least partial deactivation of the alloy, such that the residual sorption velocity and capacity may result insufficient for the foreseen operation in the device; therefore there would be required a reactivation treatment at a temperature at least equal to, or preferably higher than, that of frit-sealing, what is however generally impossible, both to prevent a remelting of the frit-sealing paste which would endanger the welding seal, and to avoid impairment of the mechanical stability of the glassy portions forming the walls of the device containing the getter.

It is an object of the present invention to provide compositions containing a non-evaporable getter alloy that, after having lost their functionality in consequence of an exposure to reactive gases at a first temperature, can then be reactivated through a thermal treatment at a second temperature which is lower than the first one.

This object is achieved according to the present invention with getter compositions formed of a mixture of powders of:
- a first component being titanium, possibly partially replaced by nickel and/or cobalt; wherein nickel and/or cobalt are present up to 50% by weight of the first component and
- a second component being a non-evaporable getter alloy comprising zirconium, vanadium, iron, and at least one further component chosen between manganese and one or more elements selected among yttrium, lanthanum and Rare Earths, wherein the weight percentage of the elements can vary in the following ranges:
   - zirconium from 60 to 90%;
   - vanadium from 2 to 20%;
   - iron from 0.5 to 15%;
   - manganese from 0 to 30%; and
   - yttrium, lanthanum and Rare Earths and mixtures thereof from 0 to 10%.

For the sake of clarity, in the remainder of the description and in the claims, the elements of the group composed of yttrium, lanthanum, Rare Earths and mixtures thereof will be referred to as "A", according to the definition adopted in US patent 5,961,750. Preferably, as component A it is used mischmetal, namely, commercial mixtures containing either cerium or lanthanum as the main component and a mixture of other Rare Earths as balance.

The inventors have found that the compositions of the invention, contrary to the NEG alloys alone and to the known compositions of a NEG alloy with a metal, can be exposed to reactive gases (such as atmospheric gases) at relatively high temperatures, e.g. about 450 °C required for the welding by frit-sealing of glassy portions, and then can be fully reactivated by a thermal treatment at a lower temperature, such as not to endanger the seal of the glassy welding or the mechanical strength of the glass portions which are near to the composition.

The invention will be described in the following with reference to the drawings, in which:
- Figure 1 shows the sorption curves of two composition according to the invention and of a prior art composition.
- Figure 2 shows the sorption curves of a third composition according to the invention before and after the frit-sealing;
- Figure 3 shows the sorption curves of a fourth composition of the invention before and after the ftit-sealing; and
- Figure 4 shows the sorption curves, before and after frit-sealing, of a known mixture between titanium and a getter alloy.

The NEG alloys used in the compositions of the invention comprise zirconium, vanadium, iron and at least one further element selected between manganese and A; manganese and the component A are not in alternative and may both be present in the alloys of the invention.

When the NEG alloy used in a composition of the invention does not comprise component A, the weight percent of the elements can vary in the following ranges:
- zirconium from 60 to 90%;
- vanadium from 2 to 20%;
- iron from 0.5 to 15%;
- manganese from 2.5 to 30%.

In this case a preferred composition is Zr 72.2% - V 15.4% - Fe 3.4% - Mn 9%.

When the NEG alloy used in a composition of the invention does not comprise manganese, the weight percent of the elements can vary in the following ranges:
- zirconium from 60 to 90%;
- vanadium from 2 to 20%;
- iron from 0.5 to 15%;
- A from 1 to 10%.

In this case a preferred composition is Zr 76.7% - V 16.4% - Fe 3.6% - A 3.3%.

Finally, when the NEG alloy used in a composition of the invention comprises both manganese and the component A, the weight percent of the elements can vary in the following ranges:
- zirconium from 60 to 85%;
- vanadium from 2 to 20%;
- iron from 0.5 to 10%;
- manganese from 2.5 to 30%; and
- A from 1 to 6%.

In this latter case, a preferred composition is Zr 70% - V 15% - Fe 3.3% - Mn 8.7% - A 3%, corresponding to the previously cited alloy St 2002.

The above NEG alloys may also contain small percentages, generally lower than 5%, of other transition elements.

These alloys are generally employed in form of powder, having a particle size between about 10 and 250 µm, and preferably of about 128 µm.

Titanium is generally employed in the compositions of the invention in form of powders, having a particle size comprised between about 0 and 40 µm. Alternatively it is possible to use titanium hydride, TiH₂, which during the subsequent thermal treatments releases hydrogen forming titanium "in situ".

The weight ratio between NEG alloy and titanium can be comprised within broad limits, such as between about 1:4 and 4:1, preferably within about 1:2 and 2:1, even more preferably in a ratio of about 3:2.

In an alternative embodiment of the invention, titanium may be partially replaced by nickel and/or cobalt. It has been observed that the compositions of the invention, during frit-sealing, release hydrogen. This can be because water sorbed during frit-sealing is decomposed by the material into oxygen and hydrogen (according to a functioning mechanism common to any getter metals and alloys); while oxygen is completely retained by the material, hydrogen sorption is an equilibrium phenomenon, so that this element is partially released. In some applications, hydrogen release is not harmful, and rather it can help avoiding oxidation of some parts of the final devices during frit-sealing. There are however applications wherein hydrogen release is undesirable and must then at least minimized; for instance, during tests carried out on flat screens to evaluate the activation and sorption properties of the compositions of the invention, it has been noted that hydrogen thus released leads to dishomogeneity in the screen brightness. The inventors have found that the partial replacement of titanium with powder of nickel and/or cobalt reduces the phenomenon. The powders of these two elements are employed with the same particle sizes previously indicated for titanium. Substitution can reach up to about 50% by weight of titanium.

Frit-sealing treatments may be different according to the kind of device to be produced and according to the specific working processes adopted by any manufacturer. During these treatments, duration, temperature and atmosphere to which the getter composition is exposed may largely vary. As a consequence, may vary in a broad range the degree of interaction of the composition with the gases present during frit-sealing; that can lead to non-reproducibility of the gas sorption properties of the composition upon the subsequent reactivation. In order to avoid the problem, it is possible to subject the compositions of the invention to a preoxidation treatment under controlled conditions, generally severe enough; for example, a typical treatment can be carried out at 450 °C during 20 minutes in air, thus obtaining a controlled oxidation of the composition. By preoxidizing the composition in conditions of time, temperature and atmosphere being at least the same as the most severe foreseen frit-sealing treatment, it is assured that during the actual frit-sealing the further interaction of the composition of the invention with the surrounding environment will be null or anyway reduced. This way, a "normalization" of the chemical composition of the composition of the invention, and a consequent higher reproducibility of its gas sorption characteristics after reactivation, is obtained.

The compositions of the invention can be used to produce getter devices of various shapes, having or not a support.

When the getter device is formed of the composition only, it will be generally in the form of pellets obtained by compression, pouring the mixture of powders into a suitable mould and compressing the same by a suitable punch, with values of pressure applied generally higher than 5000 Kg/cm². Compression may be followed by a sintering step, wherein the pellet undergoes a thermal treatment at temperatures comprised between about 700 and 1000 °C under vacuum or inert atmosphere. While in the case of compression only the getter devices have generally the shape of a pellet, when also sintering is carried out, which increases the mechanical resistance of the finished body, also other shapes can be obtained, such as relatively thin tablets.

As an alternative, the getter device comprises powders of the composition according to the invention supported on a suitable mechanical substrate, generally of metal. The substrate can be a metallic strip or sheet, in which case the powders of the composition can be deposited by cold rolling or screen-printing followed by sintering; cold rolling is a well known technique in the field of powders metallurgy, whereas the production of deposits of getter material by screen-printing is disclosed in US patent 5,882,727. The substrate can also be a container of various shapes, provided with at least an open portion through which the composition of the invention can come into contact with the space from which the gaseous impurities have to be removed, such as a short cylinder wherein the mixture of powders is poured and in which thereafter said mixture is compressed by a suitable punch. In case the composition of the invention is introduced in a container, sintering is generally not required.

The invention will be further illustrated by the following examples. These non-limiting examples show some embodiments designed to teach those skilled in the art how to practice the invention and to represent the best considered way to carry out the invention itself. Examples 1 through 10 refer to the gas absorption properties of compositions of the invention and of the prior art, before and after a treatment that simulates the frit-sealing process used in the manufacture of many devices including getter compositions. Example 11 refers to the release of hydrogen from some composition of the invention after frit-sealing.

### EXAMPLE 1

A pellet having a thickness of 0.5 mm and diameter of 4 mm is prepared, employing 0.10 g of powdered titanium having a particle size of less than 40 µm and 0.15 g of powdered alloy having a weight percent composition Zr 70% - V 15% - Fe 3.3% - Mn 8.7% - MM 3% with a particle size of about 125 µm; the pellet is produced by compression only under 10,000 Kg.

The thus produced pellet is treated in air at 450 °C during 20 minutes to simulate the conditions of a frit-sealing treatment. The pellet is then activated by thermal treatment under vacuum at 350 °C during two hours.

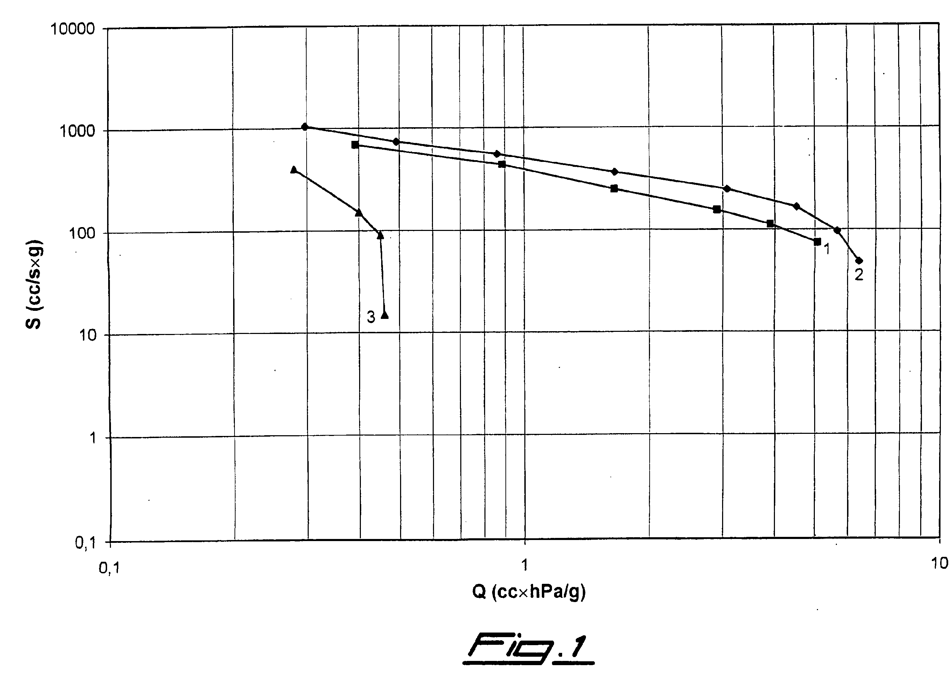

A carbon monoxide (CO) sorption test at room temperature is carried out on the so treated pellet, following the procedure described in the standard ASTM F 798-82, by operating with a CO pressure of 4 x 10⁻⁵ hPa. The results of the test are graphically shown as curve 1 in fig. 1, as sorption speed (quoted as S and measured in cc/sxg, namely cm³ of sorbed gas in a second per gram of alloy) as a function of the quantity of sorbed gas (quoted as Q and measured in cc×hPa/g, namely cm³ of gas multiplied for the pressure of the measure in hPa per gram of alloy).

### EXAMPLE 2

The test of example 1 is repeated, but in this case the pellet is subjected, after its formation by compression, to a sintering treatment under inert atmosphere at 870 °C during 40 minutes. A CO sorption test is carried out on the pellet, the results of which are shown in figure 1 as curve 2.

### EXAMPLE 3 (COMPARATIVE)

The test of example 2 is repeated, employing however a pellet obtained from a composition according to the prior art, formed of 0.10 g of powdered titanium and 0.15 g of powders of an alloy having a weight percent composition Zr 70% - V 24.6% - Fe 5.4%. A CO sorption test is carried out on the pellet, the results of which are shown in fig. 1 as curve 3.

### EXAMPLE 4 (COMPARATIVE)

The test of example 1 is repeated, using however a pellet having a weight of 0.25 g comprised only of powders of the alloy of weight percent composition Zr 70% - V 24.6% - Fe 5.4%, already known in this field. A CO sorption test is carried out on the pellet: the results of this test are not shown in the drawing because this pellet has proved to have a sorption capacity equal to zero in practice, and thereby the relevant absorption data were not detectable.

### EXAMPLE 5

A pellet having a thickness of 0.5 mm and diameter of 4 mm is prepared, employing 0.10 g of powders of titanium having a particle size of less than 40 µm and 0.15 g of powders of an alloy having a weight percent composition Zr 72.2% - V 15.4% - Fe 3.4% - Mn 9% with a particle size of about 125 µm; the mixture of powders is compressed in a suitable mould under 10,000 Kg and the pellet is then subjected to a thermal treatment of sintering at 870 °C during 40 minutes under vacuum.

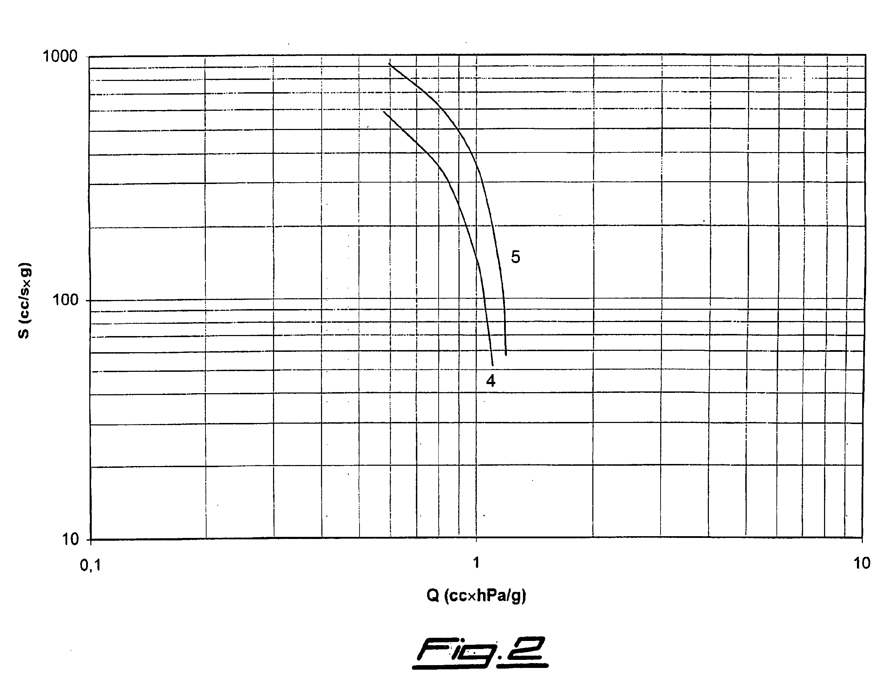

Upon exposure to air (having the effect of passivating the pellet) the thus produced pellet is activated by thermal treatment under vacuum at a temperature of 350 °C during 2 hours. A carbon monoxide (CO) sorption test at room temperature is carried out on the pellet, as described in Example 1. The results of the test are graphically shown as curve 4 in fig. 2, as sorption speed (S) as a function of the quantity of sorbed gas (Q).

### EXAMPLE 6

The test of example 5 is repeated with a new pellet, the only difference being that after its preparation, the pellet is treated at 450 °C in air along 20 minutes to simulate the conditions of a frit-sealing treatment. The pellet is then activated by thermal treatment under vacuum at 350 °C during 2 hours. A CO sorption test is carried out on this second pellet under the same conditions of the preceding test. The results of the test are graphically shown as curve 5 in figure 2.

### EXAMPLE 7

The procedure of the example 5 is repeated, employing in this case for the pellet preparation 0.15 g of powders of an alloy having weight percent composition of Zr 76.7% - V 16.4% - Fe 3.6% - MM 3.3%, wherein MM means a mixture of weight percent composition 50% cerium, 30% lanthanum, 15% neodymium, balance 5% of other Rare Earths.

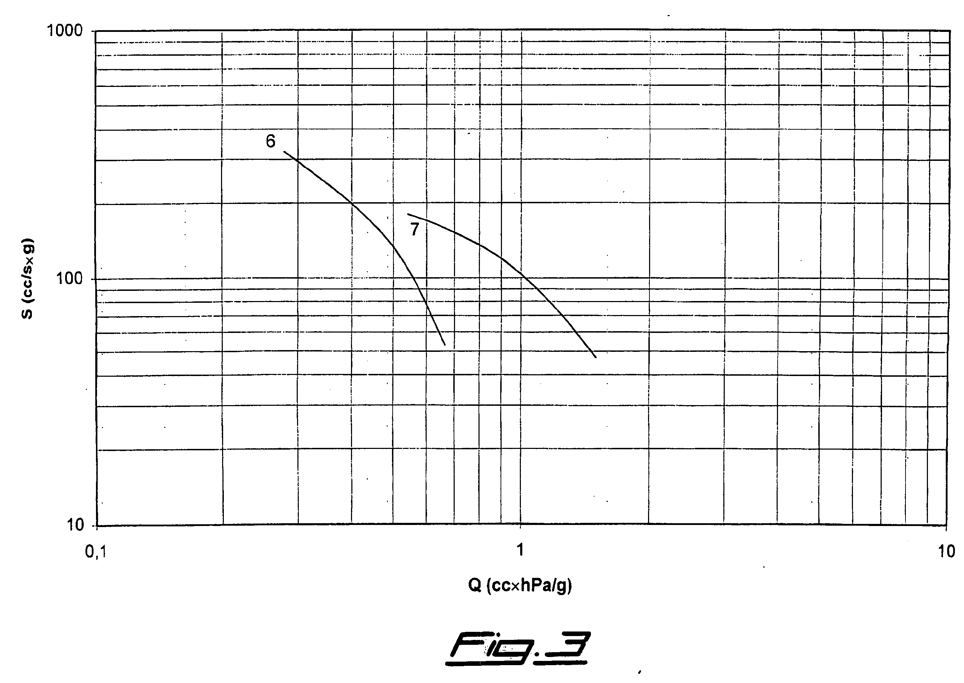

The results of the CO sorption test on this pellet are shown in figure 3 as curve 6.

### EXAMPLE 8

The procedure of example 6 is repeated, but using a pellet obtained with the alloy of example 7.

The results of the CO sorption test on this pellet are shown in figure 3 as curve 7.

### EXAMPLE 9 (COMPARATIVE)

The procedure of example 5 is repeated, but using for obtaining the pellet 0.15 g of powders of an alloy of weight percent composition Zr 70% - V 24.6 % - Fe 5.4%.

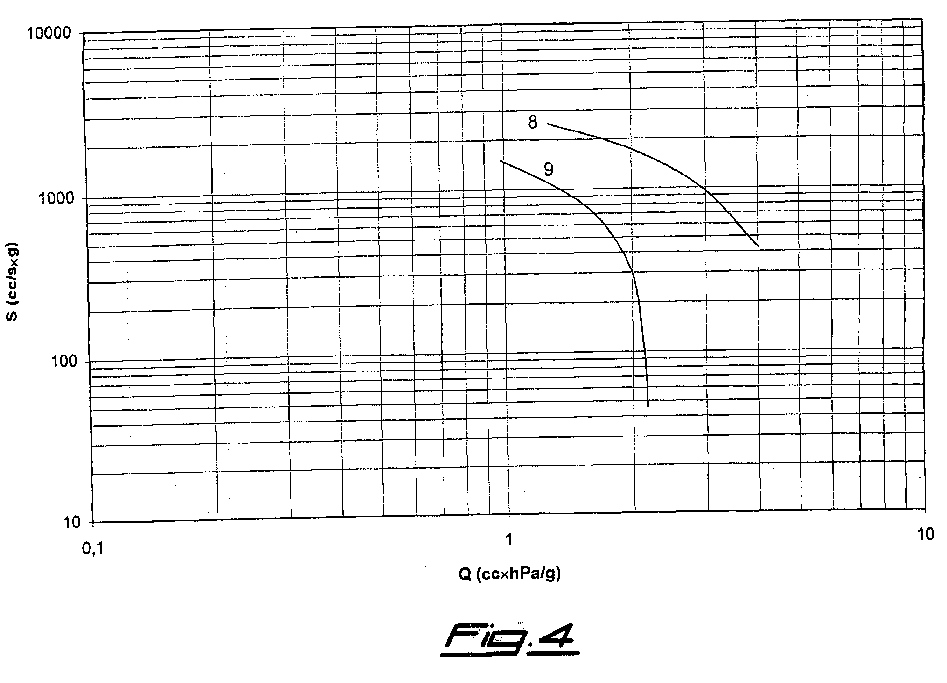

The results of the CO sorption test on this pellet are shown in figure 4 as curve 8.

### EXAMPLE 10 (COMPARATIVE)

The procedure of example 6 is repeated, but using a pellet prepared with the alloy of example 9.

The results of the CO sorption test on this pellet are shown in figure 4 as curve 9.

### EXAMPLE 11

This example refers to the release of hydrogen from compositions of the invention after frit-sealing.

By using compositions of the invention, a series of specimens in the form of pellets of thickness 0.5 mm and diameter 4 mm are prepared following the procedure of example 1. Weight percentages of the components and preoxidation conditions of the specimens are given in the following table:

**Table 1**

| **Specimen** | **Alloy** | **Ti** | **Ni** | **Co** | **Preoxidation** |
|---|---|---|---|---|---|
| 1 | 60 | 40 | / | / | / |
| 2 | 60 | 40 | / | / | air, 450 °C, 20' |
| 3 | 60 | 35 | 5 | / | air, 450 °C, 20' |
| 4 | 60 | 35 | / | 5 | air, 450 °C, 20' |
| 5 | 60 | 30 | 10 | / | air, 450 °C, 20' |
| 6 | 60 | 30 | / | 10 | air, 450 °C, 20' |

The getter alloy employed is always the one of example 1, that is, the alloy of weight percent composition Zr 70% - V 15% - Fe 3.3% - Mn 8.7% - MM 3%; also particle sizes of powders of the different components are as given in example (nickel and cobalt, when present, have the same particle size of titanium).

On the so produced samples hydrogen content analyses are carried out, on the fresh specimen and after a 20 minutes treatment at 450 °C in the presence of 1.33 hPa of water vapor; this treatment simulates a frit-sealing used by some PDPs manufacturers, which is carried out under vacuum and in which the atmosphere is essentially made of the water vapor released by the inner components of the screen (particularly, the phosphors). The hydrogen content of the various samples is measured with an hydrogen analyzer mod. RH-402 of LECO Corp. of St. Joseph, Michigan, USA. The tests results are reported in table 2. The "Hᵢₙ" and "H_{fin}" columns give, respectively, the hydrogen weight percent contained in the specimen before and after frit-sealing; the column "ΔH" gives the value of the difference H_{fin} - Hᵢₙ for each specimen; the column "Δ weight" gives the percent weight increase of the specimen due to water sorption.

**Table 2**

| **Specimen** | **Hᵢₙ** | **H_{fin}** | **ΔH** | **Δ weight** | **Retained hydrogen %** |
|---|---|---|---|---|---|
| 1 | 0.004 | 0.243 | 0.239 | 16.8 | 12.8 |
| 2 | 0.040 | 0.063 | 0.023 | 7.0 | 3.0 |
| 3 | 0.013 | 0.092 | 0.079 | 5.4 | 13.2 |
| 4 | 0.009 | 0.068 | 0.059 | 3.7 | 14.4 |
| 5 | 0.002 | 0.095 | 0.093 | 2.8 | 29.9 |
| 6 | 0.009 | 0.081 | 0.072 | 3.8 | 17.1 |

### Discussion of results

As it appears from comparing the sorption curves shown in Figs. 1 to 3, the pellets produced with compositions of the invention show upon frit-sealing good sorption features, even better than those shown before frit-sealing.

In particular, Fig. 1 shows that two pellets produced with compositions of the invention (with and without sintering, curves 2 and 1 respectively) upon frit-sealing show good sorption features, as they have still a sorption speed in the order of 100 cc/s×g after having already sorbed a gas quantity of at least 5 cc×hPa/g. On the contrary, a pellet obtained from a composition of the prior art (curve 3) appears to be substantially exhausted already upon sorption of less than 0.5 cc×hPa/g of CO; a pellet obtained solely from a known alloy (example 4) upon frit-sealing has no longer any sorption capacity.

Figs. 2 and 3 show that, quite unexpectedly, the sorption characteristics of the compositions of the invention after frit-sealing are better than those of the same composition before frit-sealing. On the contrary, pellets obtained from a prior art composition show a strong worsening of the sorption features upon frit-sealing (Fig. 4).

These tests also confirm that, contrary to known compositions, in the case of compositions according to the invention upon frit-sealing at 450 °C it is sufficient a reactivation at a lower temperature (350 °C in the examples) to obtain again good sorption properties.

The tests described in example 5 refer instead to the capability of retaining hydrogen during frit-sealing by different compositions of the invention; in particular, the relevant data are those reported in table 2. If all of the hydrogen was retained by the specimens, the "ΔH" value for each specimen should by equal to 1/9 of the "Δ weight" value; in practice this doesn't happen, because as said before part of hydrogen is released; by dividing the value in the column "ΔH" by the value in the column "Δ weight", and then multiplying the result by 100, it is obtained the percentage of hydrogen retained by the specimen compared to that sorbed upon water sorption; the higher the value in the last column, the better the specimen is from the standpoint of its capability of retaining hydrogen. From the results in the table, it is seen that substitution of part of titanium with nickel and cobalt, and in particular the substitution of 10% by weight of titanium with nickel, allows to sensibly decrease the hydrogen from the compositions of the invention.

## Claims

1. Getter compositions reactivatable by treatment at a temperature lower than that of a previous exposure to reactive gases, formed of a mixture of powders of:
- a first component being titanium or a mixture of titanium and at least one of nickel and cobalt, wherein nickel and/or cobalt are present up to 50% by weight of the first component; and
- a second component being a non-evaporable getter alloy comprising zirconium, vanadium, iron, and at least one further component chosen between manganese and one or more elements selected among yttrium, lanthanum and Rare Earths, wherein the weight percentage of the elements can vary in the following ranges:
- zirconium from 60 to 90%;
- vanadium from 2 to 20%;
- iron from 0.5 to 15%;
- manganese from 0 to 30%; and
- A from 0 to 10%;
wherein A means yttrium, lanthanum, Rare Earths and mixtures thereof.

2. Getter compositions according to claim 1, wherein said getter alloy further contains up to 5% by weight of other transition elements.

3. Getter compositions according to claim 1, wherein said getter alloy comprises zirconium, vanadium, iron and manganese and the weight percentage of these elements can vary in the following ranges:
- zirconium from 60 to 90%;
- vanadium from 2 to 20%;
- iron from 0.5 to 15%;
- manganese from 2.5 to 30%.

4. Getter composition according to claim 3, wherein said getter alloy has the weight percent composition Zr 72.2% - V 15.4% - Fe 3.4% - Mn 9%.

5. Getter compositions according to claim 1, wherein said getter alloy comprises zirconium, vanadium, iron and one or more elements selected among yttrium, lanthanum and Rare Earths and the weight percentage of these elements can vary in the following ranges:
- zirconium from 60 to 90%;
- vanadium from 2 to 20%;
- iron from 0.5 to 15%;
- A from 1 to 10%.

6. Getter composition according to claim 5, wherein said getter alloy has the weight percent composition Zr 76.7% - V 16.4% - Fe 3.6% - A 3.3%.

7. Getter compositions according to claim 1, wherein said getter alloy comprises zirconium, vanadium, iron, manganese and one or more elements selected among yttrium, lanthanum and Rare Earths and the weight percentage of these elements can vary in the following ranges:
- zirconium from 60 to 85%;
- vanadium from 2 to 20%;
- iron from 0.5 to 10%;
- manganese from 2.5 to 30%; and
- A from 1 to 6%.

8. Getter composition according to claim 7, wherein said getter alloy has the weight percent composition Zr 70% - V 15% - Fe 3.3% - Mn 8.7% - A 3%.

9. Getter compositions according to claim 1 wherein said powders of the first component have particle size of less than 40 µm.

10. Getter compositions according to claim 1, wherein said powders of the second component have particle size comprised between 10 and 250 µm.

11. Getter compositions according to claim 10 wherein said powders of the second component particle size of about 128 µm.

12. Getter compositions according to claim 1 wherein the weight ratio between the powders of said first and second components is comprised between 1:4 and 4:1.

13. Getter compositions according to claim 12 wherein said ratio is comprised between 1:2 and 2:1.

14. Getter compositions according to claim 13 wherein said ratio is 3:2.

15. Getter compositions obtainable by subjecting to an oxidation treatment the compositions of any of the preceding claims.

16. Getter compositions according to claim 15 wherein said oxidation treatment is equal to the flit-sealing treatment foreseen for the production of the device in which the composition will be contained.

17. Getter compositions according to claim 16 wherein said oxidation treatment consists in an exposure to air at 450 °C during 20 minutes.

18. Getter device employing one of the compositions according to claims from 1 to 17.

19. Device according to claim 18 being formed solely of powders of the getter composition.

20. Device according to claim 19 obtained by compression of the powders of the getter composition at a value of pressure higher than 5000 Kg/cm².

21. Device according to claim 20 obtained by a further step of sintering the compressed powder by thermal treatment at a temperature comprised between 700 and 1000 °C under vacuum or inert atmosphere.

22. Device according to claim 18 formed of powders of the getter composition supported by a mechanical substrate.

23. Device according to claim 22 wherein said substrate is a metallic strip or sheet.

24. Device according to claim 23 obtained by cold rolling of the powders on the metallic strip or sheet.

25. Device according to claim 23 obtained by screen-printing of the powders of the getter composition.

26. Device according to claim 22 wherein said substrate is a container provided with at least an open portion to allow contact between the powders of getter composition and the space from which gaseous impurities have to be removed.

## Patentansprüche

1. Getterzusammensetzung, die durch eine Behandlung bei einer Temperatur von unterhalb derjenigen einer vorhergegangenen Exposition gegenüber reaktiven Gasen reaktivierbar und aus einem Gemisch von Pulvern aus:
- einer ersten Komponente, die Titan oder ein Gemisch aus Titan und mindestens einem von Nickel und Cobalt ist, wobei Nickel und/oder Cobalt mit bis zu 50 Gew.-% der ersten Komponente vorliegen, und
- einer zweiten Komponente, die eine nicht verdampfbare Getterlegierung ist, die Zirconium, Vanadium, Eisen und mindestens einen weiteren Bestandteil umfasst, der aus Mangan und einem oder mehreren Elementen, die aus Yttrium, Lanthan und Seltenerdmetallen ausgewählt sind, ausgewählt ist, wobei der prozentuale Gewichtsanteil der Elemente innerhalb folgender Bereiche:
- 60 bis 90 % Zirconium,
- 2 bis 20 % Vanadium,
- 0,5 bis 15 % Eisen,
- 0 bis 30 % Mangan und
- 0 bis 10 % A,
variieren kann und A Yttrium, Lanthan, Seltenerdmetalle und Gemische davon bedeutet,
gebildet ist.

2. Getterzusammensetzung nach Anspruch 1, wobei die Getterlegierung weiterhin bis zu 5 Gew.-% an anderen Übergangselementen enthält.

3. Getterzusammensetzung nach Anspruch 1, wobei die Getterlegierung Zirconium, Vanadium, Eisen und Mangan umfasst und die prozentualen Gewichtsanteile dieser Elemente innerhalb folgender Bereiche variieren können:
- 60 bis 90 % Zirconium,
- 2 bis 20 % Vanadium,
- 0,5 bis 15 % Eisen,
- 2,5 bis 30 % Mangan.

4. Getterzusammensetzung nach Anspruch 3, wobei die Getterlegierung die prozentuale Gewichtszusammensetzung Zr 72,2 %-V 15,4 %-Fe 3,4 %-Mn 9 % besitzt.

5. Getterzusammensetzung nach Anspruch 1, wobei die Getterlegierung Zirconium, Vanadium, Eisen und ein oder mehrere Elemente umfasst, die aus Yttrium, Lanthan und Seltenerdmetallen ausgewählt sind, und der prozentuale Gewichtsanteil dieser Elemente innerhalb folgender Bereiche variieren kann:
- 60 bis 90 % zirconium,
- 2 bis 20 % Vanadium,
- 0,5 bis 15 % Eisen,
- 1 bis 10% A.

6. Getterzusammensetzung nach Anspruch 5, wobei die Getterlegierung die prozentuale Gewichtszusammensetzung Zr 76,7 %-V 16,4 %-Fe 3,6 %-A 3,3 % besitzt.

7. Getterzusammensetzung nach Anspruch 1, wobei die Getterlegierung Zirconium, Vanadium, Eisen, Mangan und ein oder mehrere Elemente umfasst, die aus Yttrium, Lanthan und Seltenerdmetallen ausgewählt sind, und der prozentuale Gewichtsanteil dieser Elemente innerhalb folgender Bereiche variieren kann:
- 60 bis 85 % Zirconium,
- 2 bis 20 % Vanadium,
- 0,5 bis 10 % Eisen,
- 2,5 bis 30 % Mangan,
- 1 bis 6 % A.

8. Getterzusammensetzung nach Anspruch 7, wobei die Getterlegierung die prozentuale Gewichtszusammensetzung Zr 70 %-V 15 %-Fe 3,3 %-Mn 8,7 %-A 3 % besitzt.

9. Getterzusammensetzung nach Anspruch 1, wobei die Teilchengröße der Pulver der ersten Komponente weniger als 40 µm beträgt.

10. Getterzusammensetzung nach Anspruch 1, wobei die Teilchengröße der Pulver der zweiten Komponente 10 bis 250 µm beträgt.

11. Getterzusammensetzung nach Anspruch 10, wobei die Teilchengröße der Pulver der zweiten Komponente etwa 128 µm beträgt.

12. Getterzusammensetzung nach Anspruch 1, wobei das Gewichtsverhältnis zwischen den Pulvern der ersten und der zweiten Komponente 1: 4 bis 4 : 1 beträgt.

13. Getterzusammensetzung nach Anspruch 12, wobei das Verhältnis 1 : 2 bis 2 : 1 beträgt.

14. Getterzusammensetzung nach Anspruch 13, wobei das Verhältnis 3 : 2 beträgt.

15. Getterzusammensetzung, die erhältlich ist, indem eine Zusammensetzung einer der vorhergehenden Ansprüche einer Oxidationsbehandlung unterworfen wird.

16. Getterzusammensetzung nach Anspruch 15, wobei die Oxidationsbehandlung die versiegelnde Sinterbehandlung ist, die bei der Herstellung der Vorrichtung vorgesehen ist, in welcher die Zusammensetzung enthalten ist.

17. Getterzusammensetzung nach Anspruch 16, wobei die Oxidationsbehandlung in einer 20minütigen Exposition gegenüber Luft bei 450 °C besteht.

18. Gettervorrichtung, in welcher eine der Zusammensetzungen nach den Ansprüchen 1 bis 17 verwendet wird.

19. Vorrichtung nach Anspruch 18, die ausschließlich aus Pulvern der Getterzusammensetzung gebildet wird.

20. Vorrichtung nach Anspruch 19, die durch Verdichten der Pulver der Getterzusammensetzung mit einem Druck von mehr als 5000 kg/cm² erhalten worden ist.

21. Vorrichtung nach Anspruch 20, die durch eine zusätzliche Stufe des Sinterns des verdichteten Pulvers durch eine Wärmebehandlung bei einer Temperatur von 700 bis 1000 °C unter Vakuum oder einer inerten Atmosphäre erhalten worden ist.

22. Vorrichtung nach Anspruch 18, die aus dem Pulver der Getterzusammensetzung, die von einem mechanischen Substrat getragen wird, gebildet worden ist.

23. Vorrichtung nach Anspruch 22, wobei das Substrat ein Metallstreifen oder -blech ist.

24. Vorrichtung nach Anspruch 23, die durch Kaltwalzen des Pulvers auf dem Metallstreifen oder -blech erhalten worden ist.

25. Vorrichtung nach Anspruch 23, die durch Siebdrucken des Pulvers der Getterzusammensetzung erhalten worden ist.

26. Vorrichtung nach Anspruch 22, wobei das Substrat ein Behälter ist, der mit mindestens einem offenen Bereich versehen ist, um den Kontakt des Pulvers der Getterzusammensetzung mit einem Raum zu ermöglichen, aus welchem gasförmige Verunreinigungen entfernt werden sollen.

## Revendications

1. Compositions getters réactivables par traitement à une température inférieure à celle d'une exposition précédente à des gaz réactifs, formées d'un mélange de poudres constitué de :
- un premier composant qui est du titane ou un mélange de titane et d'au moins l'un parmi du nickel et du cobalt, le nickel et/ou le cobalt étant présents jusqu'à 50 % en poids du premier composant, et
- un second composant qui est un alliage getter non-évaporable comportant du zirconium, vanadium, fer, et au moins un composant supplémentaire choisi entre le manganèse et un ou plusieurs éléments sélectionnés parmi l'yttrium, le lanthane et des Terres Rares, le pourcentage en poids des éléments pouvant varier dans les plages suivantes :
- zirconium de 60 à 90 %,
- vanadium de 2 à 20 %,
- fer de 0,5 à 15 %,
- manganèse de 0 à 30 %, et
- A de 0 à 10 %,
où A désigne l'yttrium, le lanthane, des Terres Rares et des mélanges de ceux-ci.

2. Compositions getters selon la revendication 1, dans lesquelles ledit alliage getter contient de plus jusqu'à 5 % en poids d'autres éléments de transition.

3. Compositions getters selon la revendication 1, dans lesquelles ledit alliage getter comporte du zirconium, du vanadium, du fer et du manganèse et le pourcentage en poids de ces éléments peut varier dans les plages suivantes :
- zirconium de 60 à 90 %,
- vanadium de 2 à 20 %,
- fer de 0,5 à 15%,
- manganèse de 2,5 à 30 %.

4. Compositions getters selon la revendication 3, dans lesquelles ledit alliage getter a la composition en pourcentage en poids Zr 72,2 %-V 15,4 %-Fe 3,4 %-Mn 9 %.

5. Compositions getters selon la revendication 1, dans lesquelles ledit alliage getter comporte du zirconium, du vanadium, du fer et un ou plusieurs éléments choisis parmi l'yttrium, le lanthane et des Terres Rares et le pourcentage en poids de ces éléments peut varier dans les plages suivantes:
- zirconium de 60 à 90 %,
- vanadium de 2 à 20 %,
- fer de 0,5 à 15 %,
- A de 1 à 10 %.

6. Compositions getters selon la revendication 5, dans lesquelles ledit alliage getter a la composition en pourcentage en poids Zr 76,7 %-V 16,4 %-Fe 3,6 %-A 3,3 %.

7. Compositions getters selon la revendication 1, dans lesquelles ledit alliage getter comporte du zirconium, du vanadium, du fer, du manganèse et un ou plusieurs éléments choisis parmi l'yttrium, le lanthane et des Terres Rares et le pourcentage en poids de ces éléments peut varier dans les plages suivantes:
- zirconium de 60 à 85 %,
- vanadium de 2 à 20 %,
- fer de 0,5 à 15 %,
- manganèse de 2,5 à 30 %, et
- A de 1 à 6 %.

8. Compositions getters selon la revendication 7, dans lesquelles ledit alliage getter a la composition en pourcentage en poids Zr 70 %-V 15 %-Fe 3,3 %-Mn 8,7 %-A 3 %.

9. Compositions getters selon la revendication 1, dans lesquelles lesdites poudres du premier composant ont une taille de particules inférieure à 40 µm.

10. Compositions getters selon la revendication 1, dans lesquelles lesdites poudres du second composant ont une taille de particules comprise entre 10 et 250 µm.

11. Compositions getters selon la revendication 10, dans lesquelles lesdites poudres du second composant ont une taille de particules d'environ 128 µm.

12. Compositions getters selon la revendication 1, dans lesquelles le rapport en poids entre les poudres desdits premier et second composants est compris entre 1:4 et 4:1.

13. Compositions getters selon la revendication 12, dans lesquelles ledit rapport est compris entre 1:2 et 2:1.

14. Compositions getters selon la revendication 13, dans lesquelles ledit rapport est de 3:2.

15. Compositions getters pouvant être obtenues en soumettant à un traitement d'oxydation les compositions selon l'une quelconque des revendications précédentes.

16. Compositions getters selon la revendication 15, dans lesquelles ledit traitement d'oxydation est égal au traitement de soudage au verre fritté prévu pour la production du dispositif dans lequel la composition va être contenue.

17. Compositions getters selon la revendication 16, dans lesquelles ledit traitement d'oxydation consiste en une exposition à l'air à 450 °C pendant 20 minutes.

18. Dispositif getter utilisant l'une des compositions selon les revendications 1 à 17.

19. Dispositif selon la revendication 18 qui est formé uniquement de poudres de la composition getter.

20. Dispositif selon la revendication 19 obtenu par compression des poudres de la composition getter à une valeur de pression supérieure à 5000 Kg/cm².

21. Dispositif selon la revendication 20 obtenu par une étape supplémentaire de frittage de la poudre comprimée par traitement thermique à une température comprise entre 700 et 1000 °C sous une atmosphère de vide ou inerte.

22. Dispositif selon la revendication 18, formé de poudres de la composition getter supportées par un substrat mécanique.

23. Dispositif selon la revendication 22, dans lequel ledit substrat est une bande ou feuille métallique.

24. Dispositif selon la revendication 23 obtenu par un roulage à froid des poudres sur la bande ou feuille métallique.

25. Dispositif selon la revendication 23 obtenu par sérigraphie des poudres de la composition getter.

26. Dispositif selon la revendication 22, dans lequel ledit substrat est un conteneur muni d'au moins une partie ouverte pour permettre un contact entre les poudres de la composition getter et l'espace à partir duquel des impuretés gazeuses ont été retirées.
